## Europäisches Patentamt
## European Patent Office
## Office européen des brevets

(19)

(11) Veröffentlichungsnummer: **0 003 482**
**B1**

(12)

# EUROPÄISCHE PATENTSCHRIFT

(21) Anmeldenummer: 78101811.4

(22) Anmeldetag: 21.12.78

(51) Int. Cl.³: **B 23 K 28/00**

(54) Einrichtung zum Plasmaschweissen und/oder -schneiden

(30) Priorität: 27.01.78 DE 2803580

(43) Veröffentlichungstag der Anmeldung:
22.08.79 Patentblatt 79/17

(45) Bekanntmachung des Hinweises auf die Patenterteilung:
10.12.80 Patentblatt 80/25

(84) Benannte Vertragsstaaten:
BE CH FR GB NL SE

(56) Entgegenhaltungen:
CH - A - 605 011
FR - A - 2 338 105
GB - A - 826 106
US - A - 3 838 244
US - A - 3 965 329
US - A - 4 101 754

(73) Patentinhaber: **MESSER GRIESHEIM GMBH**
**Patentabteilung Hanauer Landstrasse 330**
**D - 6000 Frankfurt**
**Main (DE)**

(72) Erfinder: **Haala, Heinrich**
**Hollern Weg 20**
**D - 8051 Neu Fahrn (DE)**
**Auer, Rupert**
**Kleistrasse 10**
**D - 8057 Eching (DE)**

Courier Press, Leamington Spa, England.

Einrichtung zum Plasmaschweißen und/oder -schneiden

Die vorleigende Erfinding betrifft eine Einrichtung zum Plasmaschweißen und /oder -schneiden mit einer Stromquelle zur Versorgung des Plasmabogens mit elektrischer Energie, mit einer Gasversorgungsvorrichtung für Plasmagas sowie mit einem Plasmabrenner, in dem eine Einschnürdüse befestigt ist und welcher über Strom- und Gasleitungen mit einer Stromquelle bzw. der Gasversorgungsvorrichtung verbunden ist.

Mit diesem Oberbegriff wird auf einen Stand der Technik bei Einrichtungen zum Plasmaschweißen Bezug genommen, wie er beispielsweise durch die FR—A—2 338 105 bekannt geworden ist.

Ferner weist diese bekannte Einrichtung in der Plasma-Gasleitung eine Meßvorrichtung auf, die dann ein Signal einer Schaltvorrichtung zum Einschalten der Stromquelle zuführt, wenn ausreichend Plasmagas zur Verfügung steht.

Bei Einrichtungen zum Plasmaschweißen und/oder -schneiden ist es erforderlich, daß die in dem Plasmabrenner befestigte Einschnürdüse von Zeit zu Zeit ausgewechselt werden muß, da infolge der hohen thermischen Belastung der in der Düse vorgesehenen Bohrung zum Einschnüren des Plasmabogens sowie infolge von an der Düse festgesetzten Materialspritzern eine optimale Führung des Plasmabogens durch die Düse nicht mehr gewährleistet ist und damit Schweiß- bzw. Schneidergebnisse negativ beeinflußt werden können.

In der Praxis erfolgt der Düsenwechsel, welcher mit einem Lösen der Düse vom Brenner verbunden ist, meist aus Bequemlichkeitsgründen des Bedienungspersonals bei eingeschalteter Stromquelle. Aufgrund der eingeschalteten Stromquelle liegt nunmehr an der Elektrode sowie den mit der Elektrode verbundenen stromführenden Bauteilen die zum Plasmaschweißen bzw. Plasmaschneiden erforderliche Leerlaufspannung an, deren Wert in der Größenordnung von 400 Volt liegt. Dadurch kann es beim Düsenwechsel vorkommen, daß die Bedienungsperson mit den spannungsführenden Teilen in Berührung kommt und aufgrund der hohen Leerlaufspannung u.U. zu Schaden kommt.

Aufgabe der vorliegenden Erfindung ist es, die o.g. Nachteile zu vermeiden und insbesondere eine Einrichtung der eingangs genannten Art zu schaffen, die gewährleistet, daß bei einem Lösen der Einschnürdüse vom Brenner die Bedienungsperson, ohne Schaden zu nehmen, auch mit ansonsten spannungsführenden Bauteilen in Berührung kommen kann.

Zur Lösung dieser Aufgabe wird gemäß der Erfindung vorgeschlagen, daß die Meßvorrichtung eine Gasdruckmeßvorrichtung ist und daß beim Lösen der Einschnürdüse aus dem Brenner durch Abfall des Gasdruckes die Stromquelle durch die mit der Gasdruckmeßvorrichtung verbundene Schaltvorrichtung abgeschaltet wird.

Gemäß einem weiteren erfindungsgemäßen Vorschlag ist die Gasdruckmeßvorrichtung in einer parallel zur Plasma-Gasleitung angeordneten Meßleitung vorgesehen, die in Brennergaskanäle mündet, deren Austritt von einer Schutzkappe verschlossen ist, so daß beim Lösen der Schutzkappe vom Brenner durch Abfall des Gasdruckes die Stromquelle durch die mit der Gasdruckmeßvorrichtung verbundenen Schaltvorrichtung abgeschaltet wird.

Durch die Erfindung wird somit vorteilhaft erreicht, daß beim Lösen der Düse-Schutzkappe vom Brenner und der sich dadurch ändernden Gasdruckverhältnisse in der Gasleitung ein Schaltkontakt ausgelöst wird, der ein Abschalten der Stromquelle erfolgt und damit stets gewährleistet, daß bereits während des Lösens der Düse/Schutzkappe ein sofortiges Abschalten der Stromquelle erfolgt und damit an den sonst spannungsführenden Brennerbauteilen keine Spannung mehr anliegt. Bei einem unbeabsichtigten Berühren dieser Bauteile während des Düsenwechsels ist damit ausgeschlossen, daß die Bedienungsperson zu Schaden kommt.

Die gemäß der Erfindung vorgesehene Gasdruckmeßvorrichtung kann bzgl. des Ansprechpunktes, bei welchem eine Betätigung der elektrischen Schaltvorrichtung erfolgen soll, beliebig feinfühlig eingestellt werden, so daß bereits bei einem geringen Druckunterschied in der Gasleitung ein Abschalten der Stromquelle erfolgt. Damit ist es beispielsweise über die Gasdruckmeßeinrichtung auch möglich, die Stromquelle dann abzuschalten, wenn der Gasdruck innerhalb der Einrichtung bestimmte Abweichungen vom optimalen, ein gutes Schneidergebnis bewirkenden, Druckwert aufweist. Damit können beispielsweise auch Undichtigkeiten im Leitungsnetz, dem Brenner sowie ein nicht richtiges Befestigen der Einschnürdüse im Brenner unmittelbar erkannt und entsprechend beseitigt werden. Darüber hinaus ist es selbstverständlich auch möglich, über die elektrische Schaltvorrichtung nicht nur ein Abschalten der Stromquelle vorzunehmen, sondern auch durch eine akustische oder optische Anzeige das Störverhalten anzuzeigen. Dies ist insbesondere bei Verwendung der Einrichtung zum Plasmaschweißen oder Plasmaschneiden in Transferstraßen von besonderem Vorteil. Hierzu kann es auch günstig sein, wen bei einem nur geringfügigen Abweichen des Gasdrucks von einem Solldruck noch nicht ein komplettes Abschalten der Stromquelle erfolgt, sondern nur eine optische oder akustische Anzeige und nach Beendigung des Schweiß- oder Schneidvorganges erst eine Beseitigung der entsprechenden Störung vorgenommen wird.

In der nachstehenden Beschreibung von zwei Ausführungsbeispielen, einer Einrichtung nach der Erfindung, wird diese unter Hinweis auf weitere vorteilhafte merkmale und unter Bezugnahme auf die Zeichnungen näher erläutert.

In den Zeichnungen veranschaulicht

Fig. 1 ein Ausführungsbeispiel nach der Erfindung

Fig. 2 ein weiteres Ausführungsbeispiel nach der Erfindung.

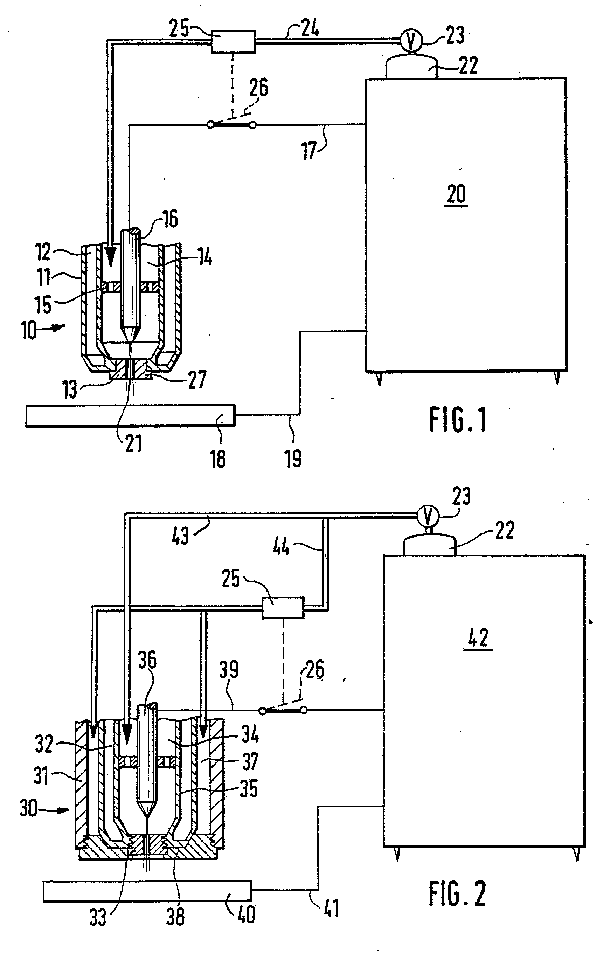

Fig. 1 ist ein Plasmaschneidbrenner Schematisch dargestellt und mit 10 bezeichnet. Der Brenner 10 weist einen Brennerkorper 11 auf, in dem ein Kühlmittelkanal 12 sowie eine Plasmabogeneinschnürdüse 13 angeordnet ist. In einem Gaskanal 14, welcher zur Führung des Plasmagases dient, ist mittels eines Zentrierstückes 15 eine Brennerelektrode 16 gehalten. Die Brennerelektrode 16 ist über eine Stromleitung 17 und das zu bearbeitende Werkstück 18 über eine Leitung 19 mit einer in ihrer Gesamtheit mit 20 bezeichneten Stromquelle verbunden. Die Stromquelle 20 dient zur Versorgung des mit 21 bezeichneten Plasmabogens mit elektrischer Energie. Der Stromquelle 20, deren Aufbau an sich bekannt ist und auf den deshalb nicht näher eingegangen wird, ist eine Gasversorgungsvorrichtung 22 zugeordnet. Diese Gasversorgungsvorrichtung 22 besteht im wesentlichen aus einer Schutzgasflasche, in der ein zur Erzeugung des Plasmabogens notwendiges Gas- bzw. Gasgemisch gespeichert wird. Über entsprechende Ventileinrichtungen 23 und eine Gasleitung 24 wird das Plasmagas dem Gaskanal 14 im Brenner zugeführt. In der Gasleitung 24 ist eine Gasdruckmeßvorrichtung 25 vorgesehen, die mit einer von dieser betätigbaren Schaltvorrichtung 26 in Verbindung steht. Die elektrische Schaltvorrichtung 26 besteht im wesentlichen aus einem Kontakt, der im Verlauf der Stromleitung 17 vorgesehen ist. Die Gasdruckmeßvorrichtung 25 ist in an sich bekannter Weise aufgebaut und beispielsweise entsprechend einer Vorrichtung ausgebildet, wie sie von der Firma Haenni & Cie unter der Bezeichnung Kühlwasserschalter vertrieben wird. Beim Betrieb des Plasmabrenners stellt sich in der Gasleitung 24 zwischen dem Ventil 23 und der Plasmaaustrittsöffnung 27 ein gewisser Staudruck ein. Erfolgt nun ein Herausschrauben der Düse 13 aus dem Brennerkörper 11, beispielsweise zum Austausch der Düse, so ändert sich aufgrund der größer werdenden Austrittsöffnung des Brenners der Staudruck im Verlauf der Gasleitung 24 und die Gasdruckmeßvorrichtung spricht an, d.h. der Kontakt der Schaltvorrichtung 26 wird von einer geschlossenen Stellung in eine offene Stellung gebracht, wie sie in Fig. 1 gestrichelt dargestellt ist. Damit ist gewährleistet, daß die elektrische Versorgung zwischen Stromquelle 20 und Brenner 10 sofort bei einem Lösen der Düse 13 vom Brenner 10 unterbrochen wird und eine Bedienungsperson nicht mit spannungsführenden Teilen mehr in Berührung kommen kann.

Beim Ausführungsbeispiel gemäß Fig. 2 ist ein Plasmaschneidbrenner schematisch dargestellt und mit 30 bezeichnet. Der Brenner 30 weist einen Brennerkörper 31 auf, in dem ein Kühlmittelkanal 32 sowie eine Plasmabogeneinschnürdüse 33 angeordnet ist. In einem Kanal 34, welcher zur Zuführung des Plasmagases dient, ist mittels eines Zentrierstückes 35 eine Brennerelektrode 36 gehalten. Ferner sind im Brennerkörper 11 Gaskanäle 37 angeordnet. Die Einschnürdüse 33 ist dabei über eine Schutzkappe 38 im Brennerkörper gehalten, wobei diese Schutzkappe 38 gleichzeitig die Gaskanäle 37 verschließt. Die Brennerelektrode 36 ist über eine Stromleitung 39 und das Werkstück 40 über eine Stromleitung 41 mit einer Stromquelle 42 verbunden. Die Stromquelle 42 ist entsprechend der Stromquelle 20 aufgebaut und beispielsweise entsprechend einer unter der Bezeichnung PC 250 von der Anmelderin vertriebenen Plasmastromquelle ausgebildet. Der Stromquelle 42 ist eine Gasversorgungsvorrichtung 22 mit Ventilen 23 zugeordnet. Vom Ventil 23 wird über eine Leitung 43 das Plasmagas dem Kanal 23 zugeführt. Ferner wird über eine von der Leitung 43 abzweigende nebenleitung 44 den Gaskanälen 37 Plasmagas zugeführt. In dieser Nebenleitung 44 ist die Gasdruckmeßvorrichtung 25 vorgesehen, die mit einer von dieser betätigbaren Schaltvorrichtung 26 in Verbindung steht. Gasdruckmeßvorrichtung 25 und Schaltvorrichtung 26 sind entsprechend den Vorrichtungen 25 und 26 nach Fig. 1 ausgebildet.

Bei einem Wechsel der Einschnürdüse 33 muß zunächst die Schutzkappe 38 gelöst werden. Dies führt zu einer Änderung des sich in der Leitung 44 und den gaskanälen 37 aufgebauten Staudruckes und die Druckmeßeinrichtung 25 kann über die Schaltvorrichtung 26 den Kontakt öffnen und die Zufuhr der elektrischen Energie zum Brenner 30 unterbrechen. Damit ist auch bei diesem Ausführungsbeispiel gewährleistet, daß bei einem Lösen der einschnürdüse 33 eine Bedienungsperson nicht mit strom- bzw. spannungsführenden Bauteilen in Berührung kommt.

Wie bereits oben erwähnt, ist der Ansprechdruck der Gasdruck-Meßvorrichtung beliebig feinfühlig einstellbar, so daß auch dann ein Abschalten der Stromquelle (Öffnen des Kontaktes der Schaltvorrichtung 26 erfolgen kann, wenn ein gewisser Gasdruck in der Leitung 43 bzw. in der Leitung 44, hervorgerufen aufgrund von Undichtigkeiten im Leitungssystem oder im Brenner, erfolgt.

Bevorzugt ist der Gegenstand der vorliegenden Erfindung bei Plasmaschweiß- und/oder -schneidbrennern einsetzbar. Selbstverständlich ist auch eine Anwendung bei Schutzgasbrennern vorteilhaft. In diesem Fall wird ein Abschalten der Stromquelle dann erfolgen, wenn die Schutzgasdüse vom Brennerkörper gelöst wird. Dazu ist es zweckmäßig, wenn durch die Schutzgasdüse ein Gaskanal verschlossen wird, der über eine Gashilfsleitung mit der Schutzgasversorgungsvorrichtung in Verbindung steht. In der Hilfsleitung ist dann entsprechend dem Ausführungsbeispiel nach Fig. 2 die Vorrichtung 25 vorgesehen, so daß entsprechend einer sich ändernden Druckänderung beim Abschrauben der Schutzgasdüse die Stromzuführung zum Schutzgasbrenner über eine entsprechende Vorrichtung 26 unterbrochen wird.

Darüber hinaus ist es möglich, nicht die gesamte Leitung 24 bzw. 44 mit den jeweiligen Gaskanälen im Brenner als Meßraum für den sich ändernden Gasdruck zu verwenden, sondern den Druckmeßraum durch in der Leitung 24 bzw. 44 oder im Brenner vorgesehene Blenden oder dergleichen zu bilden.

## Patentansprüche

1. Einrichtung zum Plasmaschweißen und/oder -schneiden mit einer Stromquelle (20) zur Versorgung des Plasmabogens (21) mit elektrischer Energie, mit einer Gasversorgungsvorrichtung (22) für Plasmagas, mit einem Plasmabrenner (10), in dem eine Einschnürdüse (13) befestigt ist und welcher über Strom- und Gasleitungen (17, 24) mit der Stromquelle (20) bzw. der Gasversorgungsvorrichtung (22) verbunden ist, sowie mit einer in der Plasmagasleitung (24) angeordneten Meßvorrichtung (25) mit der eine Schaltvorrichtung (26) zum Schalten der Stromquelle (20) betätigbar ist, dadurch gekennzeichnet, daß die Meßvorrichtung (25) eine Gasdruckmeßvorrichtung ist und daß beim Lösen der Einschnürdüse (13) aus dem Brenner (10) durch Abfall des Gasdruckes die Stromquelle (20) durch die mit der Gasdruckmeßvorrichtung (25) verbundene Schaltvorrichtung (26) abgeschaltet wird.

2. Einrichtung zum Plasmaschweißen und/oder schneiden mit einer Stromquelle (42) zur Versorgung des Plasmabogens mit elektrischer Energie, mit einer Gasversorgungsvorrichtung (22) für Plasmagas, mit einem Plasmabrenner (30), in dem eine Einschnürdüse (33) befestigt ist und welcher über Strom- und Gasleitungen (39, 43) mit der Stromquelle (42) bzw. der Gasversorgungsvorrichtung (22) verbunden ist, sowie mit einer Gasmeßvorrichtung (25), mit der eine Schaltvorrichtung (26) zum Schalten der Stromquelle (42) betätigbar ist, dadurch gekennzeichnet, daß die Meßvorrichtung (25) eine Gasdruckmeßvorrichtung ist, welche in einer parallel zur Plasmagasleitung (43) angeordneten Meßleitung (44) vorgesehn ist, daß ferner die Meßleitung (44) in Gaskanäle (37) mündet, deren Austritt von einer Schutzkappe (38) verschlossen ist und daß weiterhin beim Lösen der Schutzkappe (38) vom Brenner (30) durch Abfall des Gasdruckes die Stromquelle (42) durch die mit der Gasdruckmeßvorrichtung (25) verbundenen Schaltvorrichtung (26) abgeschaltet wird.

## Revendications

1. Installation pour · le soudage ou le découpage au plasma, installation comportant une source de courant électrique (20) fournissant de l'énergie électrique à l'arc de plasma (21), un dispositif d'alimentation en gaz (22) fournissant le gaz de plasma, un chalumeau de plasma (10), muni d'une buse limitatrice (13), et est relié à une source de courant électrique (20) et à un dispositif d'alimentation en gaz (22) par l'intermédiaire des conduites de courant et de gaz (17, 24), ainsi qu'à un dispositif de mesure (25) prévu dans la conduite de gaz de plasma (24), pour commander un dispositif de commutation (26) servant à la commutation de la source de courant électrique (20), installation caractérisée en ce que le dispositif de mesure (25) est un dispositif de mesure de pression de gaz et lors de l'enlèvement de la buse limitatrice (13) par rapport au brûleur (10), la chute de la pression du gaz coupe la source de courant électrique (20) par le dispositif de commutation (26) relié au dispositif de mesure de pression de gaz (25).

2. Installation de soudage et de découpage au plasma, comportant une source de courant (42) pour l'alimentation en énergie électrique de l'arc de plasma, un dispositif d'alimentation en gaz (22) fournissant le gaz de plasma, et un chalumeau de plasma (30), dans lequel est fixée une buse limitatrice (33), et qui est reliée à la source de courant électrique (42) et au dispositif d'alimentation en gaz (22) par l'intermédiaire des conduites d'électricité de gaz (39, 43), ainsi qu'un dispositif de mesure de gaz (25) coopérant avec un dispositif de commutation (26) pour commuter la source de courant électrique (42); installation caractérisée en ce que le dispositif de mesure (25) est un dispositif de mesure de pression de gaz qui est prévu dans une conduite de mesure (44), parallèle à la conduite de gaz de plasma (43), et la conduite de mesure (44) débouche dans des canaux de gaz (37) dont la sortie est fermée par un capuchon protecteur (38), et lors du détachement du capuchon protecteur (38) par rapport au chalumeau (30), la chute de pression du gaz coupe la source de courant électrique (42) à l'aide du dispositif de commutation (26) relié au dispositif de mesure de pression de gaz (25).

## Claims

1. Means for plasma welding and/or cutting having a power source (20) for supplying the plasma arc (21) with electrical energy, having a gas supply unit (22) for plasma gas, having a plasma torch (10), in which a constriction nozzle (13) is installed and which is connected with the power source (20), respectively the gas supply unit (22), via current and gas leads (17, 24), as well as having a measuring device (25) arranged in the plasma gas lead (24) by which a switching device (26) for switching the power source (20) can be activated, being characterized by the measuring device (25) being a gas pressure measuring device and by the switching device (26) which is connected with the gas pressure measuring device (25) switching off the power source (20) because of a gas pressure drop when the constriction nozzle (13) is released from the torch (10).

2. Means for plasma welding and/or cutting having a power source (42) for supplying the plasma arc with electrical energy, having a gas supply unit (22) for plasma gas, having a plasma torch (30) in which a constricted nozzle (33) is installed and which is connected with the power source (42), respectively the gas supply unit (22), via current and gas leads (39, 43), as well as having a gas measuring device (25) by which a switching device (26) for switching the power source (42) can be activated, being characterized by the measuring device (25) being a gas pressure measuring device which is provided in a measuring line (44) being arranged in parallel with the plasma gas lead (43), furthermore by the measuring line ending in gas bores (37) the outlet of which is locked by a protective cap (38) and furthermore by the switching device (26) which is connected with the gas pressure measuring device (25) switching off the power source (42) because of a gas pressure drop when the protective cap (38) is removed from the torch (10).

FIG.1

FIG.2